# EUROPEAN PATENT SPECIFICATION

(11) **EP 1 686 002 B1**
(45) Date of publication and mention of the grant of the patent: **09.09.2009**
(21) Application number: 06001632.6
(22) Date of filing: 26.01.2006
(51) Int. Cl.: B60N 2/18, B60N 2/02

(54) **Seat position adjusting device and controlling method for an automotive vehicle**
Vorrichtung und Verfahren zur Verstellung eines Fahrzeugsitzes
Dispositif et méthode de réglage de position d' un siège de véhicule

(30) Priority: 28.01.2005 JP 2005020636; 08.02.2005 JP 2005031368
(43) Date of publication of application: 02.08.2006
(73) Proprietor: Mazda Motor Corporation, Aki-gun, Hiroshima 730-8670 (JP)
(72) Inventor: Yamada, Naoki, Aki-gun, Hiroshima 730-8670 (JP); Miura, Yasuhiko, Aki-gun, Hiroshima 730-8670 (JP); Kamimura, Hiroki, Aki-gun, Hiroshima 730-8670 (JP); Ohtsubo, Tomonori, Aki-gun, Hiroshima 730-8670 (JP)
(74) Representative: Müller-Boré & Partner Patentanwälte

(56) References cited:
- DE-A1- 3 838 656
- DE-A1- 19 617 401
- FR-A- 2 556 294
- JP-A- 62 116 324
- US-A- 4 362 336
- US-A- 5 358 308
- US-B1- 6 340 208

## Description

The present invention relates to a seat position adjusting device of an automotive vehicle and to a seat position control method that can provide a proper sitting position to a passenger regardless of a different body size of the passenger.

A seat position adjusting device comprising a slide mechanism to move a seat cushion longitudinally and a lift mechanism to move the seat cushion vertically is known.

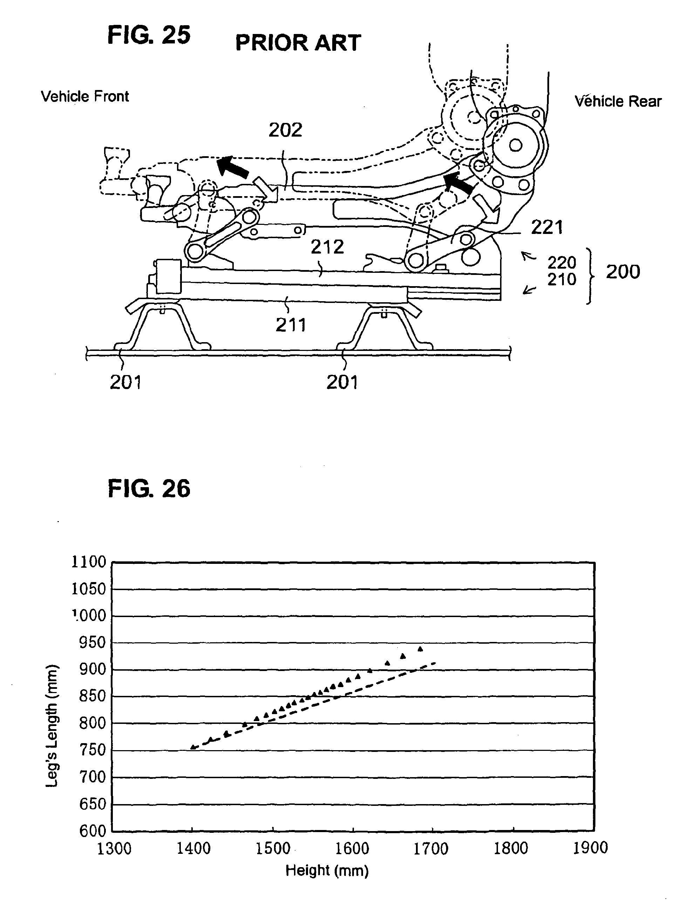

This seat position adjusting device includes, as illustrated in FIG. 25, a slide mechanism 210 that is disposed on two laterally-extending cross members 201, 201 disposed longitudinally, and a lift mechanism 220 that comprises a link member 221 provided on an upper rail 212 of the slide mechanism 210. Specifically, the slide mechanism 210 is comprised of a pair of longitudinally-extending lower rails 211 located on the cross members 201, 201 and a pair of upper rails 212 to slide longitudinally on the lower rails 211. The upper rails 212 are allowed to slide longitudinally on the lower rails 211 with an operation of a first operating lever, not illustrated, that is provided at the upper rails 212.

The lift mechanism 220 comprises the link member 221 connecting the upper rails 212 with a lower arm 202 of a seat cushion, not illustrated, and one end of the link member 221 is pivotally connected to the upper rail 212 so that it can rotate longitudinally. Further, a second operating lever, not illustrated, is provided at the link member 221, and an operation of this second operating lever allows the link member 221 to rotate around the pivotal point, so that the seat cushion can be moved forward and upward, or rearward and downward.

The above-described seat position adjusting device adjusts the longitudinal position and the vertical position of the seat cushion with separate respective operations. Further, another type of device, in which the vertical position of the seat cushion can be also adjusted with the adjustment operation of the longitudinal position thereof, is known, for example, as shown in Japanese Patent Laid-Open Publication No. 62-116324.

In the device disclosed in this publication, the upper and lower rails are provided in such a manner that their front portions are higher than their rear portions relative to a floor surface, so the seat's position is changed vertically as the upper rails slide on the lower rails. Further, there is provided a pin projecting from a side of the seat, and the pin is guided in an arc-shaped groove as the seat is moved longitudinally. Thereby, the seat face's vertical position can be changed non-linearly relative to the seat longitudinal movement according to a shape of the groove, namely, in such a manner that the seat face's vertical position changing degree relative to the seat longitudinal movement at the front section is smaller than that relative to the seat longitudinal movement at the rear section.

Herein, the proper sitting position of the passenger may require some conditions, such as that the height of the passenger's eyes could be appropriate so as to provide the passenger with a clear and proper front view beyond an engine hood of the vehicle, a brake pedal and other pedals could be operated properly, the passenger could feel comfortable. In general, relationships between the height of the passenger and the length of the passenger's legs can be shown as FIG. 26, namely, the taller the passenger is, the longer legs the passenger has. Accordingly, in order to provide any passengers with proper sitting positions, a seat face of the seat needs to be adjusted in accordance with the passenger's body size.

Namely, since a taller passenger has longer legs and higher sitting height, the seat needs to be located rearward and its seat face needs to be lowered. By contrast, for a shorter passenger, it would be preferable that the seat is located relatively forward and its sitting seat face is relatively higher. Meanwhile, there is a tendency, as shown in FIG. 26, that the taller passenger has a great ratio of the leg's length relative to the height compared with the shorter passenger (its ratio of the shorter passenger is shown in a broken line in FIG. 26). Accordingly, there are problems that a too-low positioning of the seat face would cause an inappropriatelylow eyes height or line of sight of the passenger and an inappropriately-narrow bending angle at the passenger's knee, thereby providing uncomfortable positioning to the passenger. Meanwhile, a too-high positioning of the seat face would cause an inappropriate operation for the shorter passenger. For these reasons, it will be necessary that the seat face of the seat could be adjusted at an appropriate position, not being moved upward or downward so much, for both the tall passenger and the short passenger.

Herein, in the case where this seat positioning adjustment is attained by the above-described conventional device, two separate operating levers would be necessary and the adjustments would not be so easy and thereby the passenger would not complete the adjustments preferably promptly.

Further, in the conventional device in which the seat height changes in accordance with the forward movement of the seat, the longitudinal position and the vertical position of the seat could be adjusted properly by an one-direction operation (longitudinal operation) for the seat located on the front side. However, when the seat is located on the rear side, the seat face would be lowered in proportion to the rearward movement, so the proper sitting position could not be provided to the relatively tall passenger.

D1: FR-A-2 556 294 discloses a motor vehicle articulated seat mounted on a base and in which the seat cushion is made to articulate at the end of a connecting rod articulated on the base whilst a control jack, arranged between the base and return levers articulated on the said base, slightly adjusts the inclination of the seat cushion and of the backrest itself articulated on the rear part of the seat cushion and fastened by its lower part to the said return levers. Furthermore, another control jack, arranged between an articulation pin carried by the seat cushion and the articulation pin of the lower part of the backrest on the return levers, constitutes the means for adjusting the angular position of the backrest with respect to the seat cushion in the region of the articulation pin of the backrest situated on the rear part of the seat cushion with a slight displacement of the seat cushion in the driving position.

The present invention has been devised in view of the above-described problems; and an object of the present invention is to provide a proper sitting position to any passengers with different body sizes.

This object is solved by the seat position adjusting device of an automotive vehicle according to the present invention of claim 1 and by a seat position controlling method according to claim 9. Preferred embodiments of the present invention are subject of the dependent claims.

According to the present invention, there is provided a seat position adjusting device of an automotive vehicle, comprising a seat operative or controllable to be movable in a vehicle longitudinal direction, and a position adjusting device operative to adjust a position of a seat face of a seat cushion of the seat, wherein the position adjusting device adjusts the seat face's position in such a manner that a hip point of a passenger seated in the seat lowers as the seat is moved rearward at least in a specified (predetermined or predeterminable) area where the seat is movable, and a degree of the hip point lowering is configured such that the lowering degree of the hip point at a central or intermediate section in the specified (predetermined or predeterminable) area is greater than that of the hip point lowering at a rear section and a front section that are located behind and before the central or intermediate section, respectively.

Accordingly, when the seat cushion is located at the central section in the seat's movable area, the seat face's position is adjusted such that the passenger's hip point lowers as the seat is moved rearward. When the seat cushion is located at the rear section in the seat's movable area, namely in the case where a relatively tall passenger is seated in the seat, the seat face's position is adjusted such that the lowering degree of the hip point is relatively small compared with the hip point lowering at the central section. Thereby, the seat position can be adjusted properly, so the proper height of eyes can be maintained even when the relatively tall passenger is seated.

When the seat cushion is located at the front section in the seat's movable area, namely in the case where a relatively short passenger is seated in the seat, the seat face's position is adjusted such that the lowering degree of the hip point is relatively small compared with the hip point lowering at the central section. In other words, the position adjusting device adjusts the seat face's position in such a manner that the hip point rises as the seat is moved forward, and the seat face's position is adjusted such that the rising degree of the hip point at the front section is relatively small compared with the hip point rising at the central section. Thereby, the operation of pedals can be prevented from deteriorating due to a too-high hip point even when the relatively short passenger is seated. Accordingly, the proper sitting position can be provided regardless of the body size of the passenger.

According to an embodiment of the present invention, the position adjusting device adjusts the seat face's position in such a manner that a vertical position of the hip point of the passenger is kept substantially at a substantially constant level at the rear section in the specified area. Accordingly, even when the relatively tall passenger is seated, the lowering movement of the position adjusting device can be made small, so a space for the lowering movement of the seat cushion can be saved properly.

According to another embodiment of the present invention, the vehicle comprises an another seat located behind the seat, there is further provided a rearmost area that is located behind the rear section in the specified area, the position adjusting device adjusts the seat face's position in such a manner that the hip point of the passenger seated in the seat rises as the seat is moved rearward at the rearmost area. Accordingly, a foot space for a passenger seated in this rear seat can be enlarged, so the passenger in this seat can feel comfortable.

According to another embodiment of the present invention, the position adjusting device adjusts the seat face's position in such a manner that a vertical position of the hip point of the passenger is kept substantially at a substantially constant level at the front section in the specified area. Accordingly, even when the relatively short passenger is seated, the rising movement of the position adjusting device can be made small, so a space in a vehicle cabin can be used effectively. Also, a gap between the passenger seated and a vehicle roof is not made too narrow, which may not provide the passenger with a sense of oppression.

According to another embodiment of the present invention, the position adjusting device adjusts the seat face's position in such a manner that the hip point of the passenger seated in the seat lowers as the seat is moved forward at the front section in the specified area. Accordingly, even when the seat cushion is located at the front section, the enough gap between the passenger seated and the vehicle roof can be obtained, so the sense of oppression the passenger feels can be effectively reduced.

According to another embodiment of the present invention, the position adjusting device comprises a tilt mechanism to adjust the seat face's position in such a manner that the seat face's position tilts forward as the seat is moved forward. Accordingly, since the height of knees or the bending angle of ankles of the passenger can be adjusted by changing the tilt of the seat face even when the height of the passenger's hip point is at the substantially constant level, the proper operation of the pedals and the comfortable sitting position can be provided.

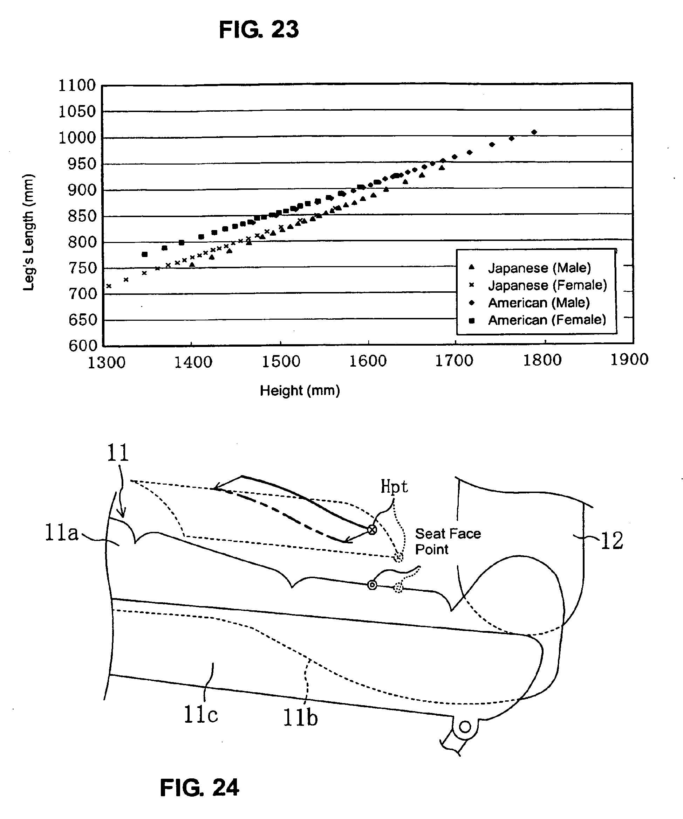

Herein, FIG. 23 shows the relationships between the passenger's height and the passenger's leg length, in which the taller passenger has longer legs and the ratio of the leg length relative to the height changes depending on a human race (Japanese, American etc.). It can be said here that since the taller passenger has longer legs and higher sitting height, the seat needs to be located rearward and its seat face needs to be lowered and for the shorter passenger, the seat needs to be located relatively forward and its sitting seat face needs to be relatively higher, with a movement characteristic of the passenger's hip point illustrated by a solid line in FIG. 24. Herein, however, since Americans generally tend to have longer legs than Japanese as shown in FIG. 23, the seat position that is proper to Japanese would not be proper to Americans because the position of eyes of Americans seated may be too low and the bending angle at knees of Americans seated may be too acute. Thus, a movement characteristic of the seat face of the seat needs to be changed so that the hip point's movement characteristic can be one illustrated by a two-dotted broken line in FIG. 24, so that the seat position can be proper to Americans seated in the seat. In FIG. 24, a double circle mark shows a position (a seat face point) on the seat face on which buttocks of the passenger seated contact, and the above-described hip point shows a position of a waist-bone of a standard-sized passenger who is seated on the seat face point. Herein, the position of the waist-bone is obtained based on body size data of the standard body-sized person.

Thus, it is preferable that the movement characteristic of the hip point of the passenger seated on the seat face of the seat cushion, namely the movement characteristic of the seat face point on the seat face is selectable from a plurality of movement characteristics.

According to another embodiment of the present invention, the position adjusting device comprises a movement characteristic selecting device to select one of a plurality of movement characteristics of the seat face point set at the specified position on the seat face, and a seat-face moving device to move the seat face such that the seat face point moves on the movement characteristic selected by the movement characteristic selecting device.

Accordingly, since the seat face point set at the specified position on the seat face of the seat cushion can be adjusted so as to move on any one of the plural movement characteristics, the passenger's hip point set based on the above-described seat face point also moves on the similar movement characteristic. Thereby, the proper sitting can be provided even to passengers with the same height but different length of their legs. For example, one of the plural movement characteristics is set to be proper to passengers who have relatively great ratio of the leg's length relative to the height (e.g., Americans), the other is set to be proper to passengers who have relatively small ratio of the leg's length relative to the height (e.g., Japanese), and these movement characteristics are properly selected according to the passenger's body size. Thereby, the proper sitting can be provided even to passengers with the same height but different length of their legs.

According to another embodiment of the present invention, the seat-face moving device includes a slide device to adjust a longitudinal position of the seat cushion of the seat, and a lift device to adjust a vertical position of the seat cushion in association with the adjustment of said slide device. Accordingly, since the seat-face moving device is comprised of the slide device and the lift device that are known as the seat position adjusting device, the above-described function can be attained with a simple and low-cost device.

According to the invention there is further provided a seat position controlling method for controlling or adjusting a seat position of a seat of an automotive vehicle operative to be movable in a vehicle longitudinal direction, comprising the step of adjusting a position of a seat face of a seat cushion of said seat in such a manner that a hip point of a passenger seated in the seat lowers as the seat cushion is moved rearward at least in a specified (predetermined or predeterminable) area where the seat is movable, and a degree of the hip point lowering is configured such that said lowering degree of the hip point at a central or intermediate section in said specified (predetermined or predeterminable) area is greater than that of the hip point lowering at a rear section and a front section that are located behind and before said central section, respectively.

According to a preferred embodiment of the invention, the seat face's position is controlled such that:
a vertical position of said hip point of the passenger is kept substantially at a substantially constant level at said rear section in the specified (predetermined or predeterminable) area,
said hip point of the passenger seated in the seat rises as the seat is moved rearward at a rearmost area that is located behind said rear section in the specified (predetermined or predeterminable) area, and/or
a vertical position of said hip point of the passenger is kept substantially at a substantially constant level at said front section in the specified (predetermined or predeterminable) area.Other features, aspects, and advantages of the present invention will become apparent from the following description which refers to the accompanying drawings. It should be understood that even though embodiments are separately described, single features thereof may be combined to additional embodiments.

FIG. 1 is a diagram showing a schematic structure of a front portion in a vehicle cabin according to an embodiment of the present invention.
FIG. 2 is an explanatory diagram showing a change of a sitting position of a passenger.
FIG. 3 is an explanatory diagram showing respective hip point's positions of a short passenger and a tall passenger, whose eyes' height are located at a specified flevel.
FIG. 4 is a right side view showing a schematic structure of a seat according to an embodiment 1.
FIG. 5A is a sectional view taken along line I-I of FIG. 4, and FIG. 5B is a sectional view taken along line II-II of FIG. 4.
FIG. 6 is a graph showing a movement characteristic of the passenger's hip point relative to a longitudinal position of a seat cushion.
FIG. 7 is a graph showing relationships between the longitudinal position of the seat and a tilt angle of a seat face.
FIG. 8 is a right side view showing a schematic structure of a seat according to an embodiment 2.
FIG. 9A is a sectional view taken along line III-III of FIG. 8, FIG. 9B is a sectional view taken along line IV-IV of FIG. 8, and FIG. 9C is a sectional view taken along line V-V of FIG. 8.
FIG. 10 is a right side view showing a schematic structure of a seat according to an embodiment 3.
FIG. 11A is a sectional view taken along line V1-V1 of FIG. 10, FIG. 11B is a sectional view taken along line VII-VII of FIG. 10, and FIG. 11C is an enlarged perspective view of Y portion of FIG. 10, when viewed from the front.
FIG. 12 is a right side view showing a schematic structure of a seat according to an embodiment 4.
FIG. 13A is a sectional view taken along line VIII-VIII of FIG. 12, and FIG. 13B is a sectional view taken along line IX-IX of FIG. 12.
FIG. 14 is a graph showing a movement characteristic of the passenger's hip point relative to the longitudinal position of the seat cushion.
FIG. 15 is a right side view showing a schematic structure of a seat according to an embodiment 5.
FIG. 16 is a graph showing a movement characteristic of the passenger's hip point relative to the longitudinal position of the seat cushion.
FIG. 17 is a graph showing a modified movement characteristic of the passenger's hip point relative to the longitudinal position of the seat cushion.
FIG. 18 is a right side view showing a schematic structure of a seat according to an embodiment 6.
FIG. 19 is a sectional view taken along line V-V of FIG. 18.
FIG. 20 is a block diagram of a control device to control respective motors.
FIG. 21 is a diagram showing movement characteristic of the passenger's hip point.
FIG. 22 is a diagram showing movement characteristic of the passenger's hip point.
FIG. 23 is a graph showing relationships between height and leg's length of Japanese and Americans.
FIG. 24 is diagram showing proper movement characteristics of the hip points of passengers who have the same height but different length of their legs.
FIG. 25 is a right side view showing a schematic structure of a conventional position adjusting mechanism.
FIG. 26 is a graph showing relationships between leg's length and height of the passenger.

Hereinafter, preferred embodiments of the present invention will be described referring to the accompanied drawings. Herein, the embodiments described are just examples and therefore descriptions on these embodiments do not have intension to limit the present invention in its application or usage.

### EMBODIMENT 1

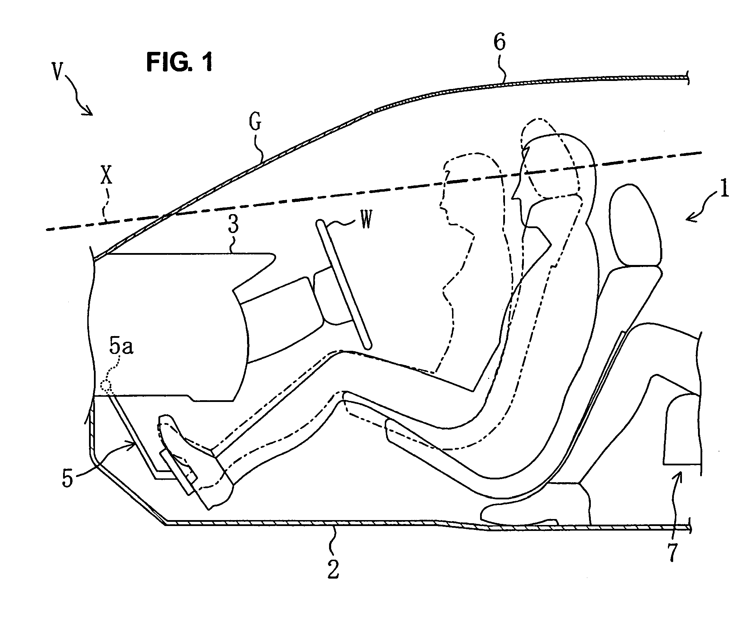

FIG. 1 shows a schematic structure of a front portion in a vehicle cabin of an automotive vehicle V according to a preferred first embodiment (embodiment 1) of the present invention. There are provided a seat 1 for a passenger located at the front portion on a floor panel 2, and an instrument panel 3 disposed at least partly below or corresponding to a windshield G at or close to the vehicle front. A steering wheel W is provided so as to project from the instrument panel 3 substantially toward the passenger, and at least one pedal 5, such as a brake pedal, is disposed at a space below the instrument panel 3. A roof 6 preferably is disposed so as to extend from the windshield G rearward over the seat 1, and there is provided a rear seat 7 substantially behind the seat 1.

The seat 1 is adjustable in its seat face's longitudinal and vertical positions and preferably its seat face's tilt and the like so that the passenger seated who has different body size can have a proper eyes' height or line of sight X to obtain a clear front view beyond an engine hood, not illustrated, and a proper operations of the pedal 5 with the passenger's foot and a comfortable sitting can be obtained, as shown in FIG. 1.

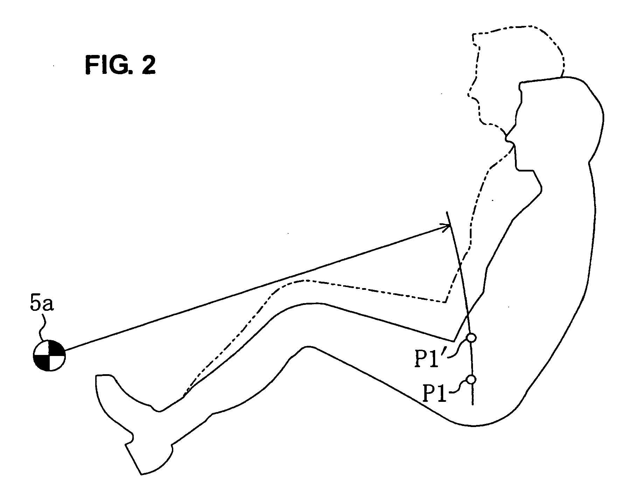

Namely, the seat 1 is configured so as to change its position in such a manner that the passenger's position can be rotated substantially around a rotational center 5a of the pedal 5 substantially without changing bending angles at the passenger's knees and ankles (form a solid-line position to a broken-line position) regardless of the body size of the passenger, as illustrated in FIG. 2. Thus, the seat position can be adjusted so as to provide the eyes' height that is proper to any passengers with the different body sizes. For example, to a relatively tall passenger, the longitudinal position of the seat 1 may be adjusted to be a rearward position and its vertical position may be adjusted to be a downward or lowered position. As shown in FIG. 2, the passenger's hip point is moved from P1 to P1' as the sitting position of the passenger is changed.

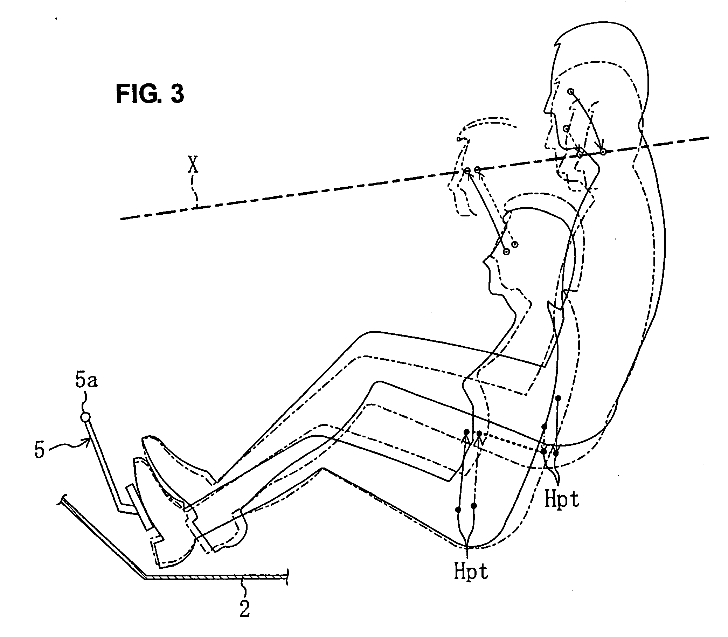

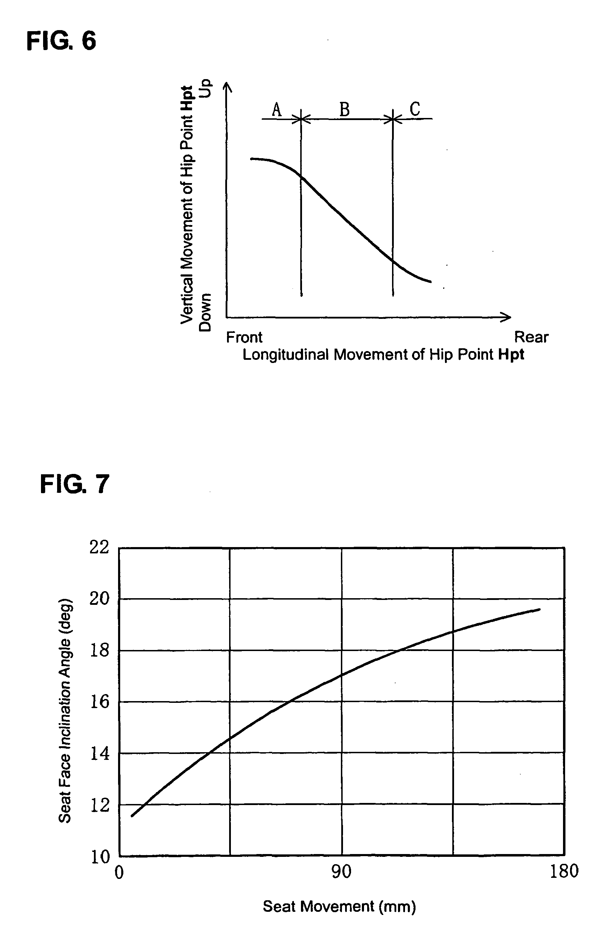

When the passenger's position is rotated or tilted, as described above, substantially around the rotational center 5a of the pedal 5 such that the passenger can have the proper eyes' height or line of sight for the clear front view beyond the engine hood, the amount of vertical movement of hip points (Hpt) of a tall passenger and a short passenger (respectively shown by slid lines) is not so different from that of hip points of a little shorter passenger than the tall passenger and a little taller passenger than the short passenger (respectively shown in dash-dotted lines) as shown in FIG. 3 (see a movement characteristic of the hip points, which is shown by a bold broken line). Namely, it is necessary that the hip point's vertical position of the relatively short passenger may not be located so high for the better operation of the pedal 5, while the hip point's vertical position of the relatively tall passenger may not be located so low for the proper eyes' height or line of sight. Thus, the seat 1 preferably is configured such that its seat face (i.e. a height position, longitudinal position, inclination and/or orientation of the seating surface of a seat cushion 11 and/or of a seat back 12) can be adjusted so as to meet relationships of the hip point's position shown in FIG. 6.

Namely, in the movement characteristic or relationship of the passenger's hip point relative to the longitudinal position of the seat cushion or of the passenger's hip point Hpt shown in FIG. 6, when the short passenger is seated in the seat 1, namely the seat face of the seat 1 is located at a front-side (or front longitudinal position) in the movable area of the seat (front section A), the degree of the vertical moving or changing of height position (rising) of the hip point (Hpt) relative to the longitudinal movement is configured to be relatively small compared with its degree when the seat face of the seat 1 is located at a central side (or intermediate longitudinal position) in the movable area of the seat (central or intermediate section B), so the position of the passenger's hip point does not become too high. Meanwhile, when the tall passenger is seated in the seat 1, namely the seat face of the seat 1 is located at a rear side (or rear longitudinal position) in the movable area of the seat (rear section C), the degree of the vertical moving or changing of height position (lowering) of the hip point (Hpt) relative to the longitudinal movement is configured to be relatively small compared with its degree when the seat face of the seat 1 is located at the central section B (or intermediate longitudinal position) as well, so the position of the passenger's hip point does not become too low. In other words, in the front section A and/or in the rear section C the relationship of the passenger's hip point relative to the longitudinal position of the seat cushion or of the passenger's hip point Hpt has a lower derivative or is relatively flatter as compared to the central or intermediate section B, wherein the relationship preferably changes its second derivative or concavity in a region between the front section A and the central or intermediate section B and/or a region between the central or intermediate section B and the rear section C.

Hereinafter, a specific structure of the seat 1 will be described.

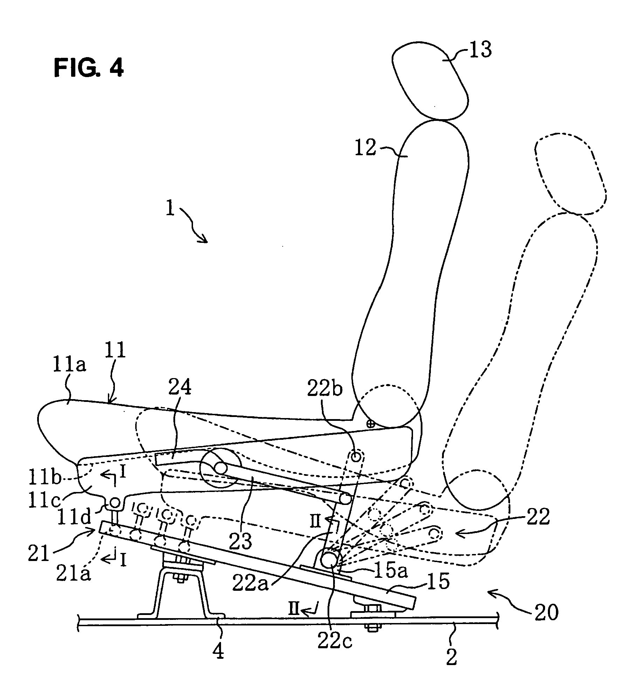

The seat 1 comprises, as illustrated in FIG. 4, a seat cushion 11 to support the weight of the passenger, a seat back 12 extending substantially upward from the seat cushion 11 (at an angle different from 0° or 180°, preferably substantially normal to the seat cushion 11) to support the passenger's back, and a headrest 13 provided at or close to the upper end of the seat back 12. Below the seat cushion 11 is provided a position adjusting mechanism 20 as a position adjusting device operative to move the seat 1 longitudinally and/or vertically and/or change its inclination or pivotally.

The seat cushion 11, in which a cushion material, such as urethane, and springs are disposed, comprises a cushion portion 11 a that bends downward when receiving the passenger's weight, an inner pan 11 b to support the cushion portion 11 a from below, and an outer pan 11 c to at least partly cover the inner pan 11 b from below. These members 11 a, 11 b and 11 c are moved as an integral unit longitudinally and/or vertically and/or pivotally.

The position adjusting mechanism 20, which is disposed between a pair of support members 15, 15 that extend substantially longitudinally with its front being located at a higher position and the outer pan 11 c of the seat cushion 11, comprises a slide portion 21 to movably or slidably support the front of the seat cushion 11 on the slide members 15 and a link portion 22 to rotatably or pivotably support the rear of the seat cushion 11 at the slide members 15. A front portion of each support member 15 preferably has a (preferably substantially U-shaped) substantially open cross section, and/or a rear portion of each support member 15 preferably has a (preferably substantially rectangular) substantially closed cross section. At the portion with the substantially U-shaped open cross section is provided the above-described slide portion 21, and to the portion with the substantially rectangular closed cross section is pivotally connected the above-described link portion 22 via pins or the like. The front of the support members 15, 15 are fixed on a cross member 4 disposed on the floor panel 2 in such a manner the front is located at the higher position.

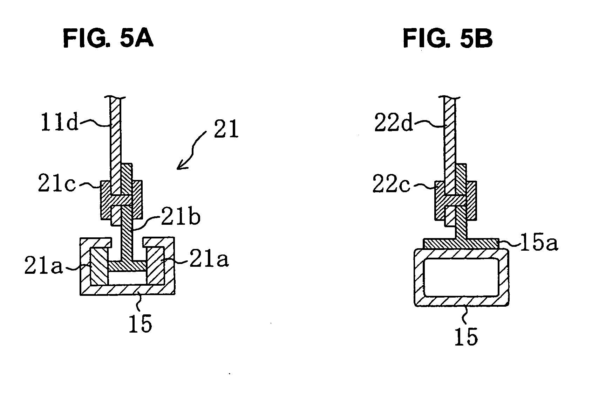

More specifically, as shown in FIG. 5A, the slide portion 21 is configured so as to move (slide) longitudinally in the substantially U-shaped cross section of the support member 15. It comprises two cylindrical rollers 21 a, 21 a and a connecting member 21 b preferably with a substantially reverse-T shape to rotatably or slidably support the rollers 21 a, 21 a. An upper portion of the connecting member 21 b is pivotally connected to a bracket portion 11d extending substantially downward or towards the floor panel 2 from the outer pan 11 c via a pin 21 c. Thereby, the roller 21 a, 21 a can slide or rotate and move smoothly in the in the substantially U-shaped cross section of the support member 15 even if the angle of the seat cushion 11 relative to the support members 15 changes.

Meanwhile, the link portion 22 is configured, as shown in FIGS. 4 and 5, such that an upper end of the bar-shaped link member 22a and its lower end are pivotally at the outer pan 11 c and a bracket 15a on the support member 15 via a pin 22b and a pin 22c, respectively. Also, the link portion 22a is coupled to an operating lever or member 24 at its intermediate portion (preferably substantially at its center portion) via a middle or intermediate member 23. Namely, the link portion 22 rotates or pivots the link member 22a forward around the pin 22c of the support member 15 with the middle or intermediate member 23 being pulled forward by operating (preferably rotating or pivoting) the operating lever 24 upward. Then, by operating (preferably rotating or pivoting) the operating lever 24 downward, the middle member 23 is pushed substantially rearward, thereby the link member 22a rotates or pivots rearward around the pin 22c. Namely, the longitudinal movable range of the seat face of the seat cushion 11 preferably is determined by the rotatable or pivotable range of the link portion 22.

Accordingly, when the seat cushion 11 is moved forward by the movement of the link portion 22, the seat face of the seat cushion 11 is inclined forward (when it is moved rearward, the seat face is greatly inclined rearward) as shown in FIG. 7. Thereby, the angles at the knees and ankles of the passenger seated in the seat 1 can be maintained substantially to be constant regardless of the longitudinal position of the seat cushion 11, thereby maintaining the comfortable position of the passenger. Accordingly, the link member 22 changing the tilt (or inclination and/or height position) of the seat face of the seat cushion 11 corresponds to a tilt mechanism. FIG. 7 shows a tilt angle of the seat face relative to the floor surface, and the greater angle means to be further inclined rearward.

In the above-described structure, when the operating lever or member 24 is operated (rotated or pivoted) upward, the link member 22a of the link portion 22 rotates or pivots forward relative to the support member 15, thereby the seat cushion 11 is moved forward and upward. Herein, the cylindrical members 21 a, 21 a at the slide portion 21 moves forward preferably in the substantially U-shaped cross section, thereby the front portion of the seat cushion 11 is moved forward. Meanwhile, when the operating lever 24 is operated (rotated or pivoted) downward from the upward position, the link member 22a of the link portion 22 rotates or pivots rearward relative to the support member 15, thereby the seat cushion 11 is moved rearward and downward. Herein, conversely the cylindrical members 21a, 21 a at the slide portion 21 moves rearward in the substantially U-shaped cross section, thereby the front portion of the seat cushion 11 is moved rearward.

Since the support members 15 supporting the slide portion 21 and the link portion 22 are provided in such a manner that its front is located at the high position as described above, the seat cushion 11 rises with the forward movement, so the hip point Hpt of the passenger seated in the seat cushion 11 also rises as the seat cushion 11 is moved substantially forward.

Herein, a bending characteristic of the cushion portion 11 a of the seat cushion 11 preferably may be set so that the hip point's position of the passenger has the relationship to the above-described longitudinal movement of the seat cushion 11 shown in FIG. 6 by the position adjusting mechanism 20. This bending characteristic may be determined considering a property that the relatively tall passenger seated in the seat 1 located rearward has relatively thick buttocks (hip) and heavy weight, while the relatively short passenger seated in the seat 1 located forward has relatively thin buttocks (hip) and light weight. Namely, the bending characteristic of the seat cushion 11 a preferably may be determined based on a model body size that is set according to the longitudinal position of the seat cushion 11, considering change of the thickness of passenger's buttocks and the passenger's weight.

### EMBODIMENT 2

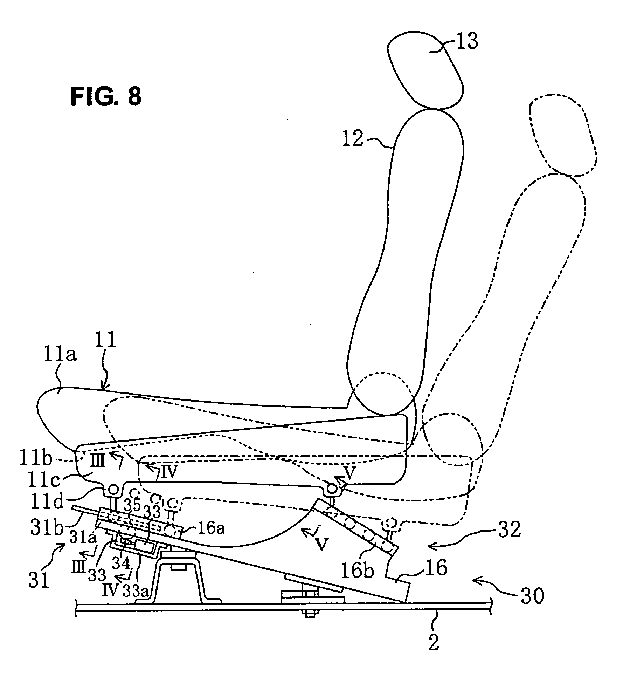

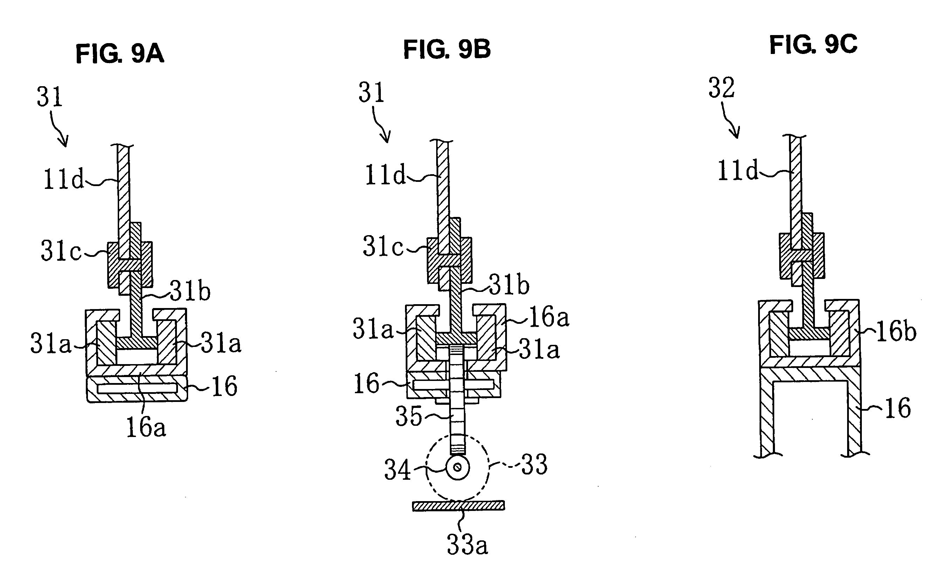

In another preferred second embodiment (embodiment 2), as shown in FIGS. 8 and 9A, B and C, there is provided a position adjusting mechanism 30 that comprises a front slide portion 31 and a rear slide portion 32. A rear mechanism that is comprised of a slide mechanism and preferably at least one motor 33 that is provided to move the seat cushion 11 longitudinally differs from the previous embodiment 1. Hereinafter, these different portions of the present embodiment 2 will be described while those elements being similar or same as in embodiment 1 will not be described in detail by referring to the same reference numerals.

The outer pan 11c of the seat cushion 11 is, as shown in FIG. 8, coupled to support members 16 to be fixed on the floor panel 2 at its front portion and its rear portion via slide members 31, 32, respectively. The support members 16 extends substantially longitudinally and their front portions are fixed on the cross member 4 in such a manner that they are located at the high position, like the embodiment 1. Each support member 16 has rails members 16a, 16b preferably with the substantially U-shaped cross sections at its front and rear portions that correspond to the front and rear slide portions 31, 32. The portion having the rear rail member 16b is formed so as to project substantially upward, so that the rear portion of the seat cushion 11, namely the above-described slide portion 32 is located at a specified (predetermined or predeterminable) position.

The rear rail member 16b is disposed with a greater inclination relative to the floor surface or floor panel 2 as compared with the front rail member 16a. Thus, the seat face of the seat cushion 11 tilts forward as the seat cushion 11 is moved forward as shown in FIG. 7, like in the embodiment 1. Thereby, the angles at the knees and ankles of the passenger seated in the seat 1 can be maintained substantially to be constant regardless of the longitudinal position of the seat cushion 11, thereby maintaining the comfortable position of the passenger. Accordingly, the rail member 16b and the slide portion 32 that can change the tilt of the seat face of the seat cushion 11 correspond to the tilt mechanism.

The slide portions 31, 32 have slide mechanisms similar to the above-described slide portion 21 of the embodiment 1 as shown in FIGS. 9A, 9B and 9C, and so descriptions of their detailed structure are omitted here. The slide portion 31 preferably comprises the motor 33 operative to move the seat cushion 11 longitudinally, and the drive mechanism of the motor will be described.

The motor 33, which is attached below the support member 16 via an attaching member 33a, transfers a drive torque to a connecting member 31 b to rotatably or pivotably support cylindrical members 31 a, 31 a of the slide portion 31. Specifically, the connecting member 31 b is comprised of a flat plate extending substantially in a longitudinal direction of the support member 16, and its lower face is formed in a shape to engage with a second gear 35, which comprises a so-called rack mechanism. Also, there are formed through holes at upper and lower faces or portions of the support member 16 and a lower face or portion of the rail member 16a, respectively. The second gear 35 is positioned to be located through these holes.

Accordingly, the rotational drive torque of the motor 33 is transferred to the second gear 35 via a first gear 34 directly couple to the motor 33, so the connecting member 31 b of the slide portion 31, which engages with the second gear 35, is moved longitudinally. Thereby, the outer pan 11 c coupled to the connecting member 31 b via a pin 31 c is also moved longitudinally and thus the longitudinal position of the seat 1 is adjusted. Herein, the longitudinal movable range of the seat face of the seat cushion 11 of the seat 1 is, of course, determined by the longitudinal moveable range of the slide portion 31.

Since the support member 16 having the slide portions 31, 32 is disposed slant or inclined with its higher front end like the above-described embodiment 1, the seat 1 rises as it is moved forward. As a result, the hip point Hpt of the passenger seated in the seat 1 also rises as the seat is moved forward.

Also, like the embodiment 1, the bending characteristic of the seat cushion 11 may be set so that the hip point's position of the passenger has the relationship shown in FIG. 6. Thereby, the proper sitting position can be provided to any passengers with different body sizes. Namely, it becomes possible that the hip point's position of the relatively tall passenger is not located too low for the proper eyes' height or line of sight, while the hip point's position of the relatively short passenger is not located too high for the better operation of the pedal 5. Accordingly, the proper seat position adjusting can be obtained according to the passenger's body size.

Further, the above-described position operation of the seat cushion 11 can be carried out just by the longitudinal movement operation of the seat cushion 11. Namely, since the position adjusting mechanism 30 adjusts the vertical position, longitudinal position and tilt angle of the seat face of the seat cushion 11, preferably a single operation can provide the proper sitting position adjustment.

### EMBODIMENT 3

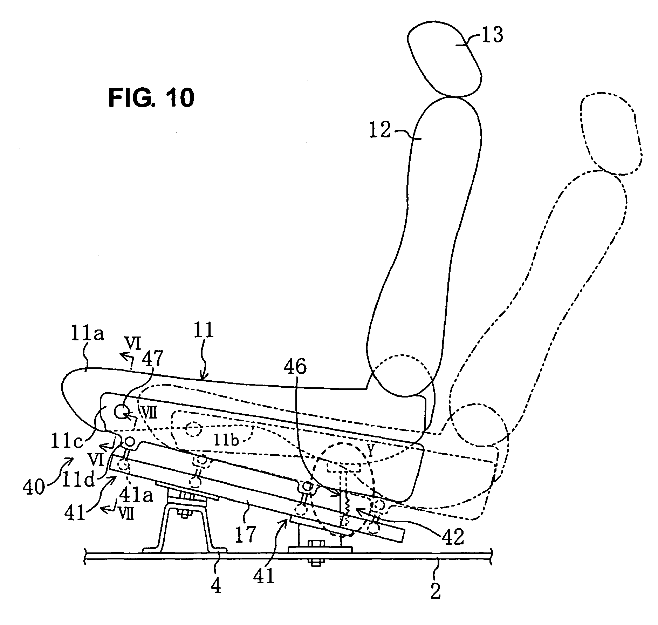

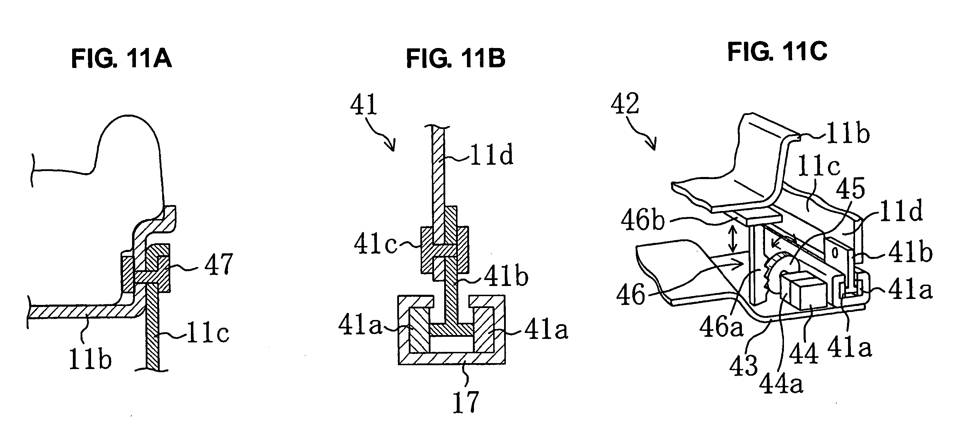

In further another third preferred embodiment (embodiment 3), as shown in FIGS. 10 and 11, there is provided a position adjusting mechanism 40 that comprises a front slide portion 41, a rear slide portion 42, and a lift portion 42 that is located behind the rear slide portion 41 to move the seat cushion 11. The rear slide portion 41 and the lift portion 42 are differ from the previous embodiment 1. Hereinafter, these different portions of the present embodiment 3 will be described while those elements being similar or same as in embodiment 1 or 2 will not be described in detail by referring to the same reference numerals.

The lift portion 42 provided at the rear portion of the seat cushion 11 is provided at a plate member 43 interconnecting a pair of support members 18, 18 as shown in FIG. 11C, and preferably comprises a motor 44 provided on the plate member 43, a gear 45 driven by the motor 44, and a lift member 46 having an engagement portion 46a engaging with the gear 45. There is provided a gear box 44a as a reduction gear between the motor 44 and the gear 45, so all weights of the set cushion 11 and the passenger seated would not be directly applied to or beard by the motor 44.

The lift member 46 comprises a rod- or pole-shape member and a contact plane portion 46b that is provided at the top end of the pole-shaped member and contacts a lower face of the inner pan 11 b of the seat cushion 11. The pole-shaped member has the above-described engagement portion 46a at its center or intermediate position, and its lower end gets through a through hole formed at the plate member 45. These lift member 46 and the gear 45 driven by motor 44 comprise a rack mechanism.

Thereby, the rotational drive of the motor 44 rotates the gear 44 and the lift member 46, whose engagement portion 46a engages with the gear, is moved substantially vertically.

Herein, the cushion portion 11 a and the inner pan 11 b of the seat cushion 11 are formed integrally or unitarily, and the inner pan 11 b is coupled to the outer pan 11 c via pins 47, 47 at the both sides of vehicle front so as to be rotatable or pivotable relative to the outer pan 11c, as shown in FIGS. 10 and 11A.

Accordingly, when being moved substantially upward by the rotational drive of the motor 44, the lift member 46 contacts the lower face of the inner pan 11 b and lifts up the cushion portion 11 a. Meanwhile, when the lift member 46 is lowered from that position, the inner pan 11 b and the cushion portion 11 a go down or are lowered.

Herein, the front and rear slide portions 41, 41 have similar or substantially the same structure and are moved longitudinally by a motor (not illustrated) or the like. The slide mechanism and drive mechanism by the motor are similar or substantially the same as those in the previous embodiments 1 and 2, and so their detailed descriptions are omitted here. Basically, however, cylindrical members 41a, 41a of the slide portion 41, 41 move longitudinally in a support member 17 preferably with a substantially U-shaped cross section, and thereby the seat cushion 11 is moved substantially longitudinally via the outer pan 11c coupled to the upper end of a connecting member 41 b that connects the cylindrical members 41 a, 41 a via a pin 41 c. The longitudinal movable range of the seat face of the seat cushion 11 is determined by the longitudinal movable range of the slide portions 41, 41.

Since the support member 17 is disposed slant with its higher front end like the above-described embodiments, the seat cushion 11 rises as it is moved forward. Also, the above-described lift member 43 lifts up the rear portion of the seat cushion 11. As a result, the hip point Hpt of the passenger is moved forward and upward.

Since when the lift portion 43 lifts up the rear portion of the seat cushion 11 as described above, the seat face of the seat cushion 11 tilts forward as the seat cushion 11 is moved forward like the embodiment 1 as shown in FIG. 7, the bending angles at the knees and ankles of the passenger seated in the seat 1 can be maintained substantially to be constant regardless of the longitudinal position of the seat cushion 11, thereby maintaining the comfortable position of the passenger. This lift portion 43 to change the tilt of the seat face of the seat cushion 11c corresponds to the tilt mechanism.

In addition, like the previous embodiments, the bending characteristic of the cushion portion 11 a of the seat cushion 11 may be set so that the hip point's position of the passenger has the relationship shown in FIG. 6. Thereby, the proper sitting position can be provided to any passengers with different body size. Namely, it becomes possible that the hip point's position of the relatively tall passenger is not located too low for the proper eyes' height or line of sight, while the hip point's position of the relatively short passenger is not located too high for the better operation of the pedal 5.

Further, the above-described position operation of the seat cushion 11 can be carried out preferably just by the longitudinal movement operation of the seat cushion 11. Namely, since the position adjusting mechanism 40 adjusts the vertical position, longitudinal position and tilt angle of the seat face of the seat cushion 11, one only single operation can provide the proper sitting position adjustment.

### EMBODIMENT 4

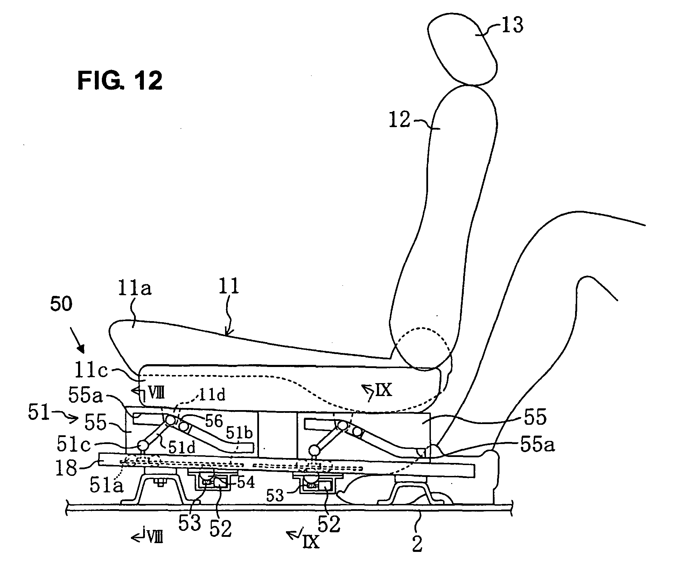

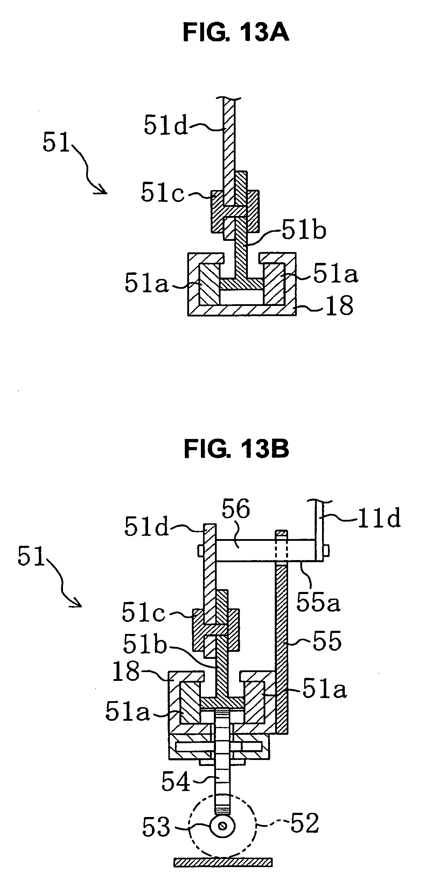

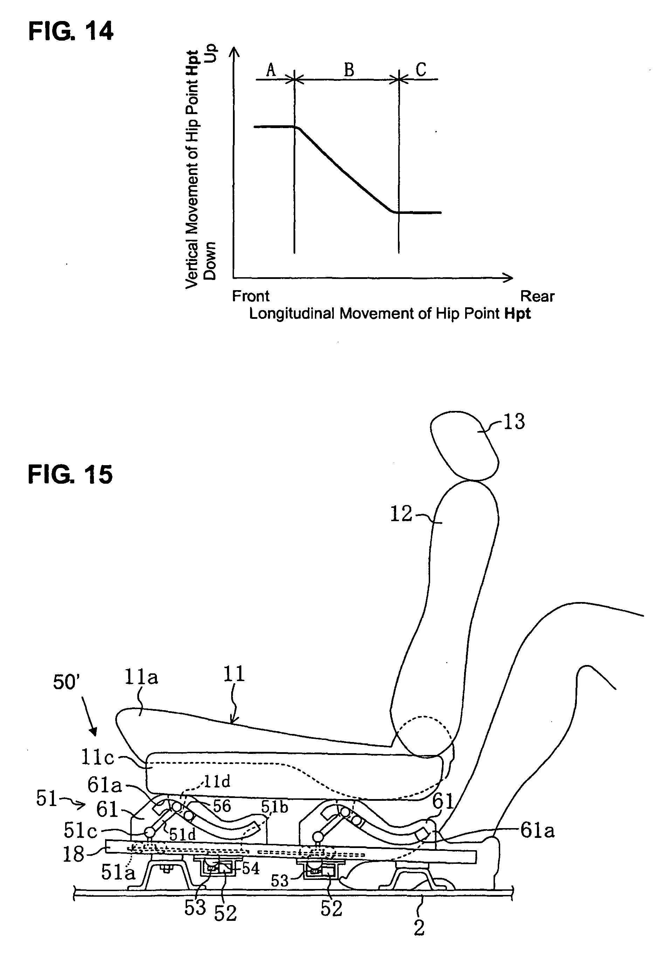

According to a further preferred embodiment (embodiment 4), the seat cushion 11 is moved in such a manner that the hip point Hpt of the passenger seated in the seat 1 is positioned at the substantially constant level at the front portion (front section A) and the rear portion (rear section C) regardless of the longitudinal position of the seat cushion 11, namely in a manner of relationships as shown in FIG. 14. A position adjusting mechanism 50 comprising slide and guide portions, as shown in FIGS. 12 and 13, differ from the corresponding portions of the previous embodiment 1. Hereinafter, these different portions of the present embodiment 4 will be described.

Namely, as shown in FIG. 12, there are provided a pair of support members 18 extending substantially longitudinally in parallel to the floor panel 2, which have their substantially U-shaped cross section. The seat cushion 11 has at the front and rear portions thereof slide portions that slide longitudinally in substantially U-shaped cross sections of the slide portions 51, 51. The slide portions 51, 51 have the similar or same structure to those in the embodiments 1 through 3, so their detailed descriptions are omitted here. Basically, however, two cylindrical members 51 a, 51 a that rotate and move in the support members 18 are rotatably connected via a connecting member 51 b preferably having a substantially reverse-T shape, and a coupling member 51d is pivotally supported at an upper portion of the connecting member 51 b via a pin 51 c.

Below the support member 18 preferably is provided motors 52 to move the slide portions 51, 51 longitudinally, and the torque is transferred to the slide portions 51, 51 via respective first gears 53 coupled to the motors 52 and respective second gears 54 engaging with the first gears 53. The drive mechanism by the motors 52 is similar or the same as that in the previous embodiment 2, so its detailed descriptions are omitted here. Basically, however, the connecting member 51 b is comprised of a plate member, and its lower face has an engagement shape that engages with the second gear 54, which comprises the so-called rack mechanism to convert the rotation of the motor 52 to a substantially straight-line movement of the each slide portion 51.

Meanwhile, as shown in FIG. 13B, a guide plate 55 that has a substantially bent- or crank-shaped guide hole 55a for providing the passenger's hip point position in dependency of its longitudinal position as shown in FIG. 14 is provided inside the support member 18 (at a side of the seat cushion 11) so as to be located along the support member 18 and substantially perpendicularly to the floor panel 2. And, a guide member 56 is disposed so as to move in the guide hole 55a of the guide plate 55. The guide member 56 is coupled to the coupling member 51 d via a pin at its one end, and connected to the bracket portion 11 d of the outer pan 11c of the seat cushion 11 at its other end.

Accordingly, when the motor 52 rotates, the rotational torque is transferred to the connecting member 51 b of the slide portion 51 via the first and second gears 53, 54, so the connecting member 51 b is moved longitudinally. Herein, two cylindrical members 51 a, 51 a connected to the connecting member 51 b properly rotate, so the slide portion 51 moves smoothly longitudinally.

As the slide portion 51 moves longitudinally, the guide member 56 moves along the guide hole 55a of the guide plate 55 via the coupling member 51d coupled to the upper of the connecting member 51 b. Thus, the seat cushion 11 connected to the guide member 56 is moved along the shape of the guide hole 55a. Herein, although the guide hole 55a is formed in the substantially crank shape as shown in FIG. 12, a connecting portion between the guide member 56 and a connecting portion between the coupling member 51d and the connecting member 51b are respectively rotated longitudinally as the guide member 56 moves. Thereby, the guide member 56 can move smoothly in the guide hoe 55a. Herein, the longitudinal movable range of the seat face of the seat cushion 11 is determined by the longitudinal movable range of the guide member 56 in the guide hole 55a.

As described above, when the seat cushion 11 is moved longitudinally, the seat cushion 11 moves along the shape of the guide hole 55a. As a result, the hip point's position of the passenger seated in the seat 1 can be changed with the relationship shown in FIG. 14. Accordingly, the proper operation of the pedal 5 can be provided to the relatively short passenger, while the proper eyes' height or line of sight can be provided to the relatively tall passenger, so that the proper sitting position can be provided to any passengers with different body size. In other words, in the front section A and/or in the rear section C the relationship of the passenger's hip point relative to the longitudinal position of the seat cushion or of the passenger's hip point Hpt as shown in FIG. 14 has a lower derivative or is relatively flatter as compared to the central or intermediate section B, wherein in the front section A and/or in the rear section C the vertical position of the hip point Hpt preferably is substantially constant independently of the longitudinal position thereof.

Also, the seat face' position of the seat cushion 11 is adjusted such that the height of the hip point Hpt is maintained at the substantially constant level when the seat cushion 11 is positioned at or in correspondence of the front portion (front section A). Thereby, the gap between the passenger and the vehicle roof is not made too narrow, and thus a sense of oppression may not be provided to the passenger.

Further, the seat face' position of the seat cushion 11 is adjusted such that the height of the hip point Hpt is maintained at the substantially constant level when the seat cushion 11 is positioned at or in correspondence of the rear portion (front section C). Thereby, the foot space of the passenger seated in the rear seat is not made too narrow, and thus a sense of oppression for the foot space may not be provided to the passenger as well.

In addition, since the seat face of the seat cushion 11 is maintained at the substantially constant level at the specified (predetermined or predeterminable) range as described above, the vertical movable area of the seat cushion 11 can be made small by the position adjusting mechanism 50. Thereby, a space for vertical movement of the seat 1 in the cabin is made small, and thus the space utility around the seat 1 can also be improved.

Furthermore, the above-described position of the seat cushion 11 can be easily obtained by the preferably single operation of the longitudinal movement for the seat cushion 11.

Although the seat face of the seat cushion 11 is maintained at the substantially constant level at the front portion and the rear portion, this constant-level adjustment may be provided at either portion, namely, only at the front portion or at the rear portion.

### EMBODIMENT 5

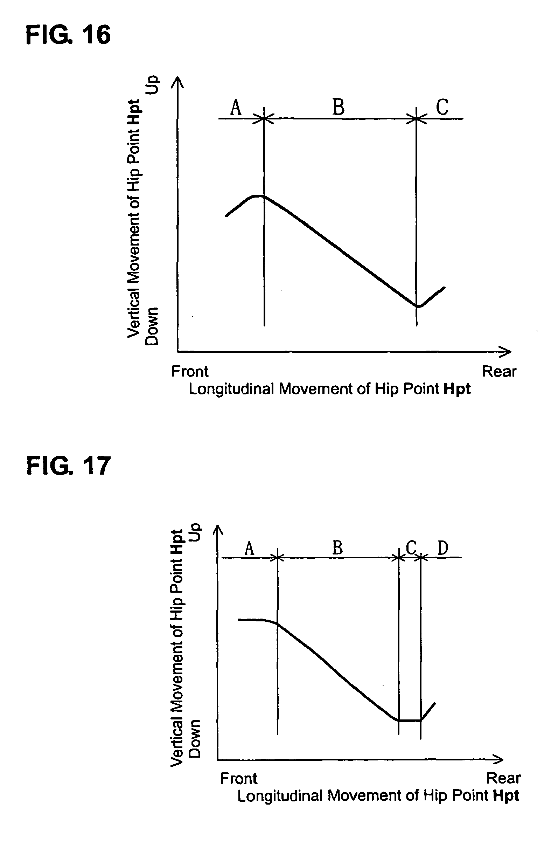

According to a further preferred fifth embodiment (embodiment 5), the seat cushion 11 is moved in such a manner that the hip point of the passenger seated in the seat 1 goes down when the seat cushion 11 is positioned at the front portion, while it goes up when the seat cushion 11 is positioned at the rear portion, namely in a manner of relationships as shown in FIG. 16. A position adjusting mechanism 50' comprising guide plates with a different shape of guide holes from the guide plate of the previous embodiment 4, as shown in FIG. 15, only differs from the embodiment 4. Hereinafter, this different portion of the present embodiment 5 will be described.

Namely, as shown in FIG. 15, there are provided a pair of support members 18 extending longitudinally in parallel to the floor panel 2. Inside the support members 18 (at the side of the seat cushion 11) are provided guide plates 61 that are located along the support members 18 and perpendicularly to the floor panel 2. Each guide plate 61 has a guide hole 61 a having a substantially S shape, which provides the relationship of the passenger's hip point Hpt to its longitudinal position shown in FIG. 16.

Accordingly, when the slide portions 51, 51 are moved longitudinally by the motors 52, 52, that movement is transferred to the guide members 56 provided in the guide holes 61 a via the coupling members 51d, 51d and thereby the guide members 56 move in the guide holes 61 a. Herein, since the seat cushion 11 is connected to the guide members 56 at the bracket portions 11 d of the outer pan 11 c, the seat cushion 11 goes substantially up and down along the shape of the holes 61 a as the guide members 56 move in the guide holes 61 a.

As described above, when the seat cushion 11 is moved longitudinally, the seat cushion 11 moves along the shape of the guide holes 61 a. As a result, the hip point's position of the passenger seated in the seat 1 can be changed according to the relationship shown in FIG. 16. Accordingly, the proper operation of the pedal 5 can be provided to the relatively short passenger, while the proper eyes' height or line of sight can be provided to the relatively tall passenger, so that the proper sitting position can be provided to any passengers with different body sizes.

Also, the seat cushion 11 is adjusted such that the height of the hip point Hpt goes down when the seat cushion 11 is positioned at the front portion (front section A) so that the relationship of FIG. 16 has a maximum approximately in a transitional region between the front section A and the central or intermediate section B. Thereby, the gap between the passenger and the vehicle roof 6 is not made too narrow, and thus the sense of oppression may not be provided to the passenger.

Further, the seat cushion 11 is adjusted such that the height of the hip point Hpt goes up when the seat cushion 11 is positioned at the rear portion (front section C) so that the relationship of FIG. 16 has a minimum approximately in a transitional region between the central or intermediate section B and the rear section C. Thereby, it is prevented that a rear end of the seat cushion 11 or the seat back 12 would contact a leg of the passenger seated in the rear seat and the foot space of the rear passenger is not made too narrow, and thus a sense of oppression for the foot space may not be provided to the passenger.

In addition, since the seat face of the seat cushion 11 may be maintained at the substantially constant level at the specified (predetermined or predeterminable) range as described above, the vertical movable area of the seat cushion 11 can be made small by the position adjusting mechanism 50'. Thereby, a space for vertical movement of the seat 1 in the cabin is made small, and thus the space utility around the seat 1 can also be improved.

Furthermore, the above-described position of the seat cushion 11 can be easily obtained by the single operation of the longitudinal movement for the seat cushion 11.

Although the seat face of the seat cushion 11 may be maintained at the substantially constant level at the front portion and the rear portion, this constant-level adjustment may be provided at either portion, namely, only at the front portion or at the rear portion.

Herein, the present invention should not be limited to the above-described embodiments. Although the seat face's height of the set cushion 11 is maintained at the substantially constant level at the rear section C in the embodiment 4, the seat face may be changed so as to rise as the seat cushion 11 is moved rearward at a rearmost area (rear most section D) as shown in FIG. 17. Thereby, the proper sitting position can be provided to the relatively tall passenger. Also, since the seat cushion 11 is moved such that its rear end or the seat back 12 changes their positions along the shape of the leg of the rear passenger, from its instep from its knee, a sense of oppression may not be provided to the passenger.

Further, although the movement characteristic of the hip point of the passenger has the similar shapes at the front section A and the rear section C, different shapes may be adopted for the respective sections A and C. For example, the shape of the movement characteristic of the embodiment 1 may be applied to the section A, while that of the embodiment 4 may be applied to the section C. Herein, these movement characteristics can be obtained by adopting the guide holes having such different characteristic hole shapes.

Also, the embodiments 4 and 5 may comprise the tilt mechanism or a resilient member 70 like the embodiments 1 through 3. Accordingly, the passenger's hip point Hpt can change surely along the specified (predetermined or predeterminable) movement characteristic even if the cushion portion 11 a is changed by the weight of the passenger and the like.

### EMBODIMENT 6

According to a further preferred sixth embodiment (embodiment 6), the seat cushion 11 is moved in such a manner its movement characteristic is selectable from a plurality of movement characteristics.

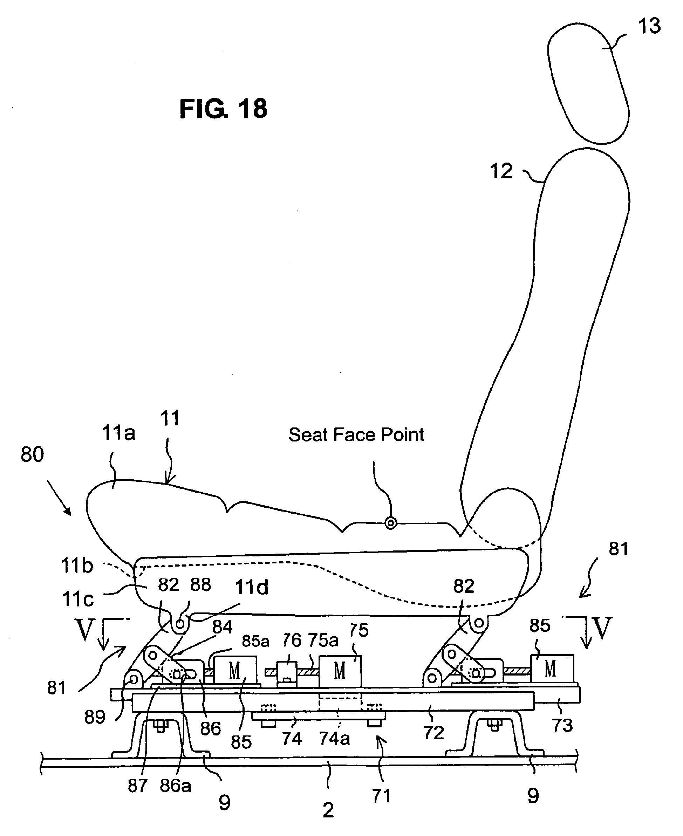

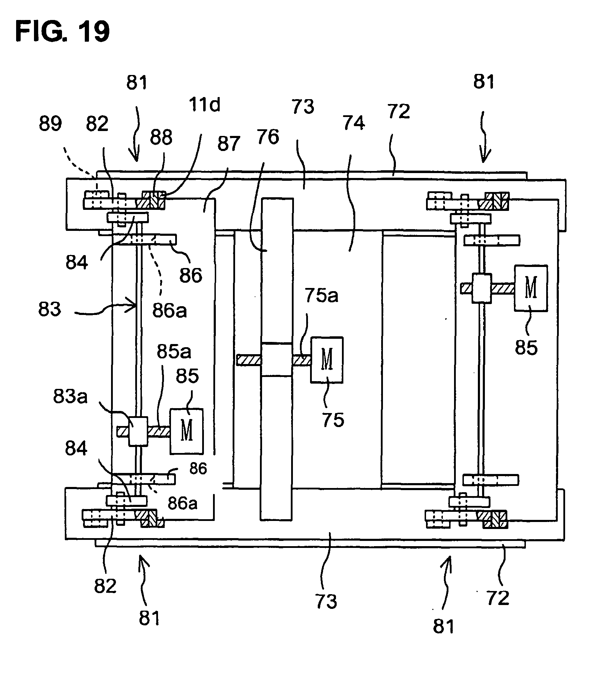

Namely, in the present embodiment 6, as shown in FIGS. 18 and 19, there is provided a position adjusting mechanism 80 comprising a slide portion 71 (slide device) that slides the seat cushion 11 by a motor and a lift portions 81, 81... (slide device) that moves the seat cushion 11 longitudinally and/or vertically by another motor.

The slide portion 71 comprises, as shown in FIGS. 18 and 19, a pair of lower rails 72, 72 that are provided on cross members 9, 9, a pair of upper rails 73, 73 that are placed to slide substantially longitudinally on the lower rails 72, 72, and a motor 75 that is provided on a support plate 74 placed on the lower rails 72, 72 to move the upper rails 73, 73 relative to the lower rails 72, 72. The motor 75 has an output shaft 75a with a screw portion formed thereon, which engages with a screw hole of a connecting member 76 fixed to the upper rails 73, 73. Accordingly, as the motor 75 fixed to the lower rails 72, 72 rotates, the connecting member 76 with the screw hole is moved relative to the output shaft 75a with the screw portion. In FIG. 18, there is provided a spacer 74a between the motor 75 and the support plate 74 so that the output shaft 75a of the motor 75 and the screw hole of the connecting member 76 are aligned concentrically.

The lift portions 81, 81... are provided on the upper rails 73, 73 at respective portions below the four corners of the seat cushion 11, and comprises a link mechanism to move the seat cushion 11 vertically and longitudinally relative to the upper rails 73, 73. Specifically, each lift portion 81 includes a link member 82 that is pivotally connected to the bracket 11 d projecting downward from the outer pan 11 c of the seat cushion 11 and the upper rail 73 at its both ends via pins 88, 89, a middle or intermediate member 84 that is pivotally connected to the center or an intermediate portion of the link member 82 and a connecting shaft 83, which will be described below, at its both ends, and a motor 85 that drives the connecting shaft 83 substantially longitudinally.

The connecting shaft 83 is comprised of a long member extending substantially laterally to interconnect the middle members 84, 84 of the right and left lift portions 81, 81, and is disposed so as to get through long guide holes 86a, 86a formed at guide plates 86, 86 that are provided inside the middle or intermediate members 84, 84. Also, the connecting shaft 83 has a projecting portion 83a with a screw hole, which engages with a screw portion formed on the output shaft 85a of the motor 85. The motor 85 and the guide plates 86, 86 are fixed to a plate member 87 placed on the upper rails 73.

Accordingly, when the motor 85 rotates, the screw portion of the output shaft 85a of the motor 85 also rotates and thereby the projecting portion 83a with the screw hole is moved along with the connecting shaft 83. Herein, since the connecting shaft 83 is moved substantially longitudinally along the guide holes 86a, 86a of the guide plates 86, 86, even if the downward force acts on the connecting shaft 86 e.g. due to the weight of the passenger in the seat cushion 11, the connecting shaft 83 may not be moved greatly in the vertical direction by the downward force.

Then, as the connecting shaft 83 is moved longitudinally, the middle or intermediate member 84 connected to the connecting shaft 83 is also moved substantially longitudinally, so the longitudinal force is transferred to the link member 82 to which one end of the middle or intermediate member 84 is connected. Thus, the middle or intermediate member 84 is connected to the center of the link member 82, and the both ends of the link member 82 are pivotally connected to the outer pan 11 c of the seat cushion 11 and the upper rail 73 of the slide portion 71, respectively, Thereby, the link member 82 rotates or pivots longitudinally around the connecting portion with the upper rail 73. As a result, the seat cushion 11 is moved forward and upward, or the rearward and downward.

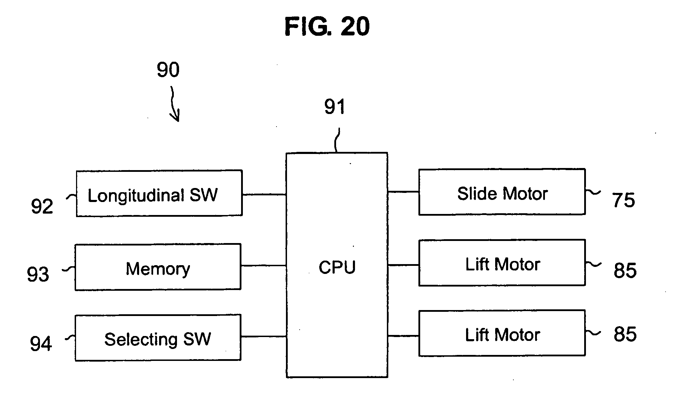

Herein, the motor 75 of the slide portion 71 and the motors 85, 85 of the lift portion 81 are controlled by a control device 90 shown in FIG. 20. Namely, these motors 75, 85, 85 are coupled to CPU 91 of the control device 90, and also to the CPU 91 are coupled a longitudinal switch 92 operative to move the seat cushion 11 longitudinally, a memory 93 to memorize one or more, preferably a plurality of movement characteristics of the seat cushion 11, a movement-characteristic selecting switch 94 (movement-characteristic selecting device) operative preferably to allow the passenger select one of a plurality of movement characteristics memorized in the memory 93. When a specified (predetermined or predeterminable) movement characteristic is selected by the passenger with the movement-characteristic selecting switch 94, the control signals for the respective motors 75, 85, 85 are read from the memory 93 and then output to the one or more motors according to the output signals of the longitudinal switch 92.

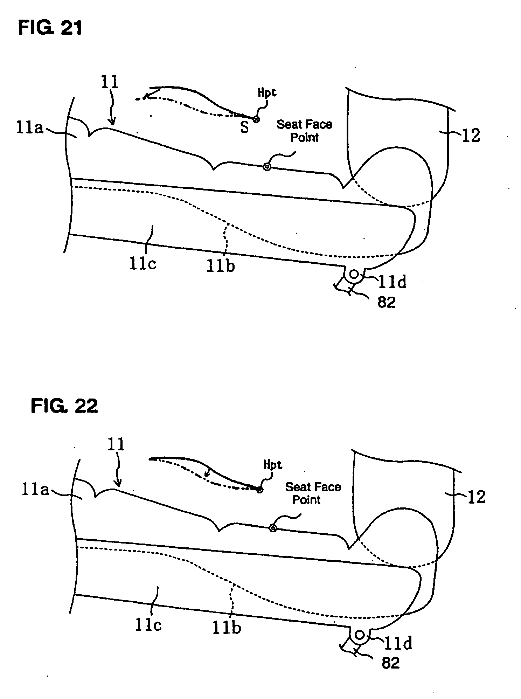

According to the above-described structure, the movement characteristics of the passenger's hip point (Hpt) are selectable, for example, from the ones shown in FIGS. 21 and 22. Namely, as shown in FIG. 21, there are provided a specified (predetermined or predeterminable) movement characteristic (first movement characteristic, shown by a solid line) and another movement characteristic (second movement characteristic, shown by a two-dotted broken line) that has the substantially same characteristic of a rear part behind a specified (predetermined or predeterminable) position S and a forward-advanced characteristic of a front part before the S position. According to the characteristics, since the hip point Hpt is not lowered too much when it is located rearward, the movable range of the lift portions 81 can be narrowed and thereby the structure of the lift portions 81 can be made compact and the space for movement can be made small. Herein, the above-described specified (predetermined or predeterminable) position S may be properly determined so at to provide the proper sitting position to any passengers with different ratio of the leg's length relative to the height. For example, it may be located at the foremost position, which could provide the common movement characteristic of the passenger's hip point Hpt regardless of the different ratio of that. In FIGS. 18, 21 and 22, the double circles show the positions of the seat face point, and they show respectively the positions of the seat face point where the seat cushion 11 (the hip point) is located at the rearmost location in FIGS. 21 and 22.

Also, there may be provided another example of movement characteristics as shown in FIG. 22. Namely, there are provided a specified (predetermined or predeterminable) characteristic that would be suitable to the passenger with the small ratio of the leg's length relative to the height (first movement characteristic, shown by a solid line) and another movement characteristic that would be suitable to the passenger with the great ratio of the leg's length relative to the height (second movement characteristic, shown by a two-dotted broken line), which have the substantially same characteristic of the front end part and the rear end part. Accordingly, the vertical movable range of the hip point can be further narrowed compared to that shown in FIG. 21 and thereby the structure of the lift portions 81 can be made compact and the space for movement can be made small. Herein, although the vertical movement is suppressed at the both end parts or sections of the movement characteristics in the above characteristics of FIG. 22, it may be suppressed at either one of the end parts.

Herein, the control data of the respective motors 75, 85, 85 to allow the passenger's hip point Hpt to move along or to be controlled as to follow the movement characteristics shown in FIGS. 21 and 22 is or may be stored in the movement characteristic memory 93. Accordingly, by the passenger selecting any preferable movement characteristic with the movement-characteristic selecting switch 94, the position of the hip point Hpt can be changed to flow the selected characteristic shown in FIGS. 21 and 22 by operating the longitudinal switch 92 to simply move the seat cushion 11 longitudinally. Herein, the above-described slide portion 71, lift portion 81 and control device 90 correspond to the seat-face moving device. The CPU 91, which reads in from the memory 93 the control data of the motors 75, 85, 85 for the selected movement characteristic of the hip point, corresponds to the movement-characteristic selecting device.

According to the present embodiment, the seat cushion 11 can be moved in such a manner the preferable movement characteristic is selectable from a plurality of movement characteristics, by controlling the movement of the slide portion 71 and the lift portion 81 with the motors 75, 85, 85.

Accordingly, the seat face's position is adjusted by the position adjusting device 20 in such a manner that the passenger's hip point Hpt lowers as the seat cushion 11 is moved rearward, and the degree of the hip point lowering is configured such that the lowering degree of the hip point Hpt at the central or intermediate section B is greater than that of the hip point lowering at the rear section C and the front section A that are located behind and before the central or intermediate section B respectively. Accordingly, the proper sitting position to any passengers with different body sizes can be provided.

Herein, the present invention should not be limited to the above-described embodiment. The selectable movement characteristics of the hip point (Hpt) may be set as shown in FIG. 24. Namely, taking into account that the short passenger (generally, a female passenger) has the ratio of the leg's length relative to the height that is different from that of the tall passenger (generally, a male passenger) despite the same human race, the movement characteristics may be set such that the vertical movement is relatively small compared to the longitudinal movement when the hip point is located at the front side or the rear side.

## Claims

1. A seat position adjusting device for an automotive vehicle (V), comprising:
a seat (1) operative to be movable in a vehicle longitudinal direction; and
a position adjusting device (20; 30; 40; 50; 50'; 80) operative to adjust a position of a seat face of a seat cushion (11) of said seat (1),
wherein said position adjusting device (20; 30; 40; 50; 50'; 80) adjusts the seat face's position in such a manner that a hip point (Hpt) of a passenger seated in the seat (1) lowers as the seat cushion (11) is moved rearward at least in a specified area where the seat (1) is movable,
**characterized in that**
a degree of the hip point lowering is configured such that said lowering degree of the hip point (Hpt) at a central section (B) in said specified area is greater than that of the hip point lowering at a rear section (C) and a front section (A) that are located behind and before said central section (B) respectively.

2. A seat position adjusting device for an automotive vehicle (V) of claim 1, wherein said position adjusting device (50) adjusts the seat face's position in such a manner that a vertical position of said hip point (Hpt) of the passenger is kept substantially at a constant level at said rear section (C) in the specified area.

3. A seat position adjusting device for an automotive vehicle (V) of one of the preceding claims, wherein the vehicle (V) comprises another seat (7) located behind said seat (1), there is further provided a rearmost area (D) that is located behind said rear section (C) in the specified area, said position adjusting device (50) adjusts the seat face's position in such a manner that said hip point (Hpt) of the passenger seated in the seat (1) rises as the seat (1) is moved rearward at said rearmost area (D).

4. A seat position adjusting device for an automotive vehicle (V) of one of the preceding claims, wherein said position adjusting device (50) adjusts the seat face's position in such a manner that a vertical position of said hip point (Hpt) of the passenger is kept substantially at a constant level at said front section (A) in the specified area.

5. A seat position adjusting device for an automotive vehicle (V) of one of the preceding claims 1 to 3, wherein said position adjusting device (50') adjusts the seat face's position in such a manner that said hip point (Hpt) of the passenger seated in the seat (1) lowers as the seat (1) is moved forward at said front section (A) in the specified area.

6. A seat position adjusting device for an automotive vehicle (V) of one of the preceding claims, wherein said position adjusting device (20; 30; 40) comprises a tilt mechanism (22; 16b, 32; 43) to adjust the seat face's position in such a manner that the seat face's position tilts forward as the seat (1) is moved forward.

7. A seat position adjusting device for an automotive vehicle (V) of one of the preceding claims, wherein said position adjusting device (80) comprises a movement-characteristic selecting device (91, 94) to select one of a plurality of movement characteristics of a seat face point set at a specified position on the seat face, and a seat-face moving device (71, 81, 90) to move the seat face such that the seat face point moves on the movement characteristic selected by said movement characteristic selecting device (91, 94).

8. A seat position adjusting device for an automotive vehicle (V) of claim 7, wherein said seat-face moving device includes a slide device (71) to adjust a longitudinal position of the seat cushion (11) of the seat (1), and a lift device (81) to adjust a vertical position of the seat cushion (11) in association with the adjustment of said slide device (71).

9. A seat position controlling method for controlling a seat position of a seat (1) of an automotive vehicle (V) operative to be movable in a vehicle longitudinal direction, comprising the following steps:
adjusting a position of a seat face of a seat cushion (11) of said seat (1) in such a manner that a hip point (Hpt) of a passenger seated in the seat (1) lowers as the seat cushion (11) is moved rearward at least in a specified area where the seat (1) is movable,
**characterized by**
configuring a degree of the hip point lowering such that said lowering degree of the hip point (Hpt) at a central section (B) in said specified area is greater than that of the hip point lowering at a rear section (C) and a front section (A) that are located behind and before said central section (B) respectively.

10. A seat position controlling method according to claim 9, wherein the seat face's position is controlled such that:
a vertical position of said hip point (Hpt) of the passenger is kept substantially at a constant level at said rear section (C) in the specified area,
said hip point (Hpt) of the passenger seated in the seat (1) rises as the seat (1) is moved rearward at a rearmost area (D) that is located behind said rear section (C) in the specified area, and/or
a vertical position of said hip point (Hpt) of the passenger is kept substantially at a constant level at said front section (A) in the specified area.

## Patentansprüche

1. Sitzpositionverstell- bzw. Sitzpositioneinstellvorrichtung für ein Kraftfahrzeug (V), umfassend:
einen Sitz (1), welcher betreibbar ist, um in einer Fahrzeuglängsrichtung beweglich zu sein; und
eine Positionverstellvorrichtung (20; 30; 40; 50; 50', 80), welche betreibbar ist, um eine Position einer Sitzfläche eines Sitzpolsters (11) des Sitzes (1) einzustellen bzw. zu verstellen,
wobei die Positionverstellvorrichtung (20; 30; 40; 50; 50'; 80) die Sitzflächenposition derart verstellt, dass ein Hüftpunkt (Hpt) eines in dem Sitz (1) sitzenden Passagiers absinkt, wenn das Sitzpolster (11) nach rückwärts in zumindest einem vorgegebenen Bereich, wo der Sitz (1) beweglich ist, bewegt wird,
**dadurch gekennzeichnet, dass**
ein Ausmaß der Hüftpunkt-Erniedrigung derart konfiguriert ist, dass das Erniedrigungsausmaß des Hüftpunkts (Hpt) in einem zentralen Abschnitt (B) in dem vorgegebenen Bereich größer ist als die Hüftpunkt-Erniedrigung in einem hinteren Abschnitt (C) und einem vorderen Abschnitt (A), die entsprechend hinter und vor dem zentralen Abschnitt (B) angeordnet sind.

2. Sitzpositionverstellvorrichtung für ein Kraftfahrzeug (V) nach Anspruch 1, wobei die Positionverstelleinrichung (50) die Sitzflächenposition derart verstellt, dass eine vertikale Position des Hüftpunkts (Hpt) des Passagiers im Wesentlichen auf einer konstanten Ebene bzw. Höhe in dem hinteren Abschnitt (C) in dem vorgegebenen Bereich gehalten wird.

3. Sitzpositionverstellvorrichtung für ein Kraftfahrzeug (V) nach einem der vorhergehenden Ansprüche, wobei das Fahrzeug (V) einen weiteren Sitz (7) umfasst, der hinter dem Sitz (1) angeordnet ist, wobei ferner ein hinterster Bereich (D) bereitgestellt ist, der hinter dem hinteren Abschnitt (C) in dem vorgegebenen Bereich angeordnet ist, wobei die Positionverstelleinrichtung (50) die Sitzflächenposition derart verstellt, dass der Hüftpunkt (Hpt) des in dem Sitz (1) sitzenden Passagiers ansteigt, wenn der Sitz (1) rückwärts in dem hintersten Bereich (D) bewegt wird.

4. Sitzpositionverstellvorrichtung für ein Kraftfahrzeug (V) nach einem der vorhergehenden Ansprüche, wobei die Positionverstellvorrichtung (50) die Sitzflächenposition derart einstellt, dass eine vertikale Position des Hüftpunkts (Hpt) des Passagiers im Wesentlichen auf einer konstanten Ebene bzw. Höhe in dem vorderen Abschnitt (A) in dem vorgegebenen Bereich gehalten wird.

5. Sitzpositionverstellvorrichtung für ein Kraftfahrzeug (V) nach einem der vorhergehenden Ansprüche 1 bis 3, wobei die Positionverstellvorrichtung (50') die Sitzflächenposition derart verstellt, dass der Hüftpunkt (Hpt) des in dem Sitz (1) sitzenden Passagiers absinkt, wenn der Sitz (1) vorwärts in dem vorderen Abschnitt (A) in dem vorgegebenen Bereich bewegt wird.

6. Sitzpositionverstellvorrichtung für ein Kraftfahrzeug (V) nach einem der vorhergehenden Ansprüche, wobei die Positionverstellvorrichtung (20; 30; 40) einen Kippmechanismus (22; 16b; 32; 43) umfasst, um die Sitzflächenposition derart zu verstellen, dass die Sitzflächenposition nach vorwärts kippt, wenn der Sitz (1) nach vorwärts bewegt wird.

7. Sitzpositionverstellvorrichtung für ein Kraftfahrzeug (V) nach einem der vorhergehenden Ansprüche, wobei die Positionverstellvorrichtung (80) eine Vorrichtung (91, 94) zur Auswahl einer Bewegungs-Charakteristik umfasst, um eine aus einer Vielzahl von Bewegungs-Charakteristiken eines Sitzflächenpunkts auszuwählen, welcher in einer vorgegebenen Position auf der Sitzfläche festgelegt wird, und eine Sitzflächen-Bewegungsvorrichtung (71, 81, 90), um die Sitzfläche derart zu bewegen, dass sich der Sitzflächenpunkt auf der Bewegungs-Charakteristik bewegt, welche durch die Vorrichtung zur Auswahl einer Bewegungs-Charakteristik (91, 94) ausgewählt wird.

8. Sitzpositionverstellvorrichtung für ein Kraftfahrzeug (V) nach Anspruch 7, wobei die Sitzflächen-Bewegungsvorrichtung eine Gleitvorrichtung (71) zum Verstellen einer Längsposition des Sitzpolsters (11) des Sitzes (1) und eine Hubvorrichtung (81) zum Verstellen einer vertikalen Position des Sitzpolsters (11) in Übereinstimmung mit der Verstellung der Gleitvorrichtung (71) umfasst.

9. Sitzposition-Steuerungsverfahren zum Steuern einer Sitzposition eines Sitzes (1) eines Kraftfahrzeugs (V), das betreibbar ist, um in einer Fahrzeuglängsrichtung beweglich zu sein, umfassend die folgenden Schritte:
Verstellen bzw. Einstellen einer Position einer Sitzfläche eines Sitzpolsters (11) des Sitzes (1) in derartiger Weise, dass ein Hüftpunkt (Hpt) eines in dem Sitz (1) sitzenden Passagiers erniedrigt wird, wenn das Sitzpolster (11) rückwärts in zumindest einem vorgegebenen Bereich, wo der Sitz (1) bewegbar ist, bewegt wird,
**gekennzeichnet, durch**
Konfigurieren eines Ausmaßes der Hüftpunkt-Erniedrigung, so dass das Erniedrigungs-Ausmaß des Hüftpunkts (Hpt) in einem zentralen Abschnitt (B) in dem vorgegebenen Bereich größer ist als die Hüftpunkt-Erniedrigung in einem hinteren Abschnitt (C) und einem vorderen Abschnitt (A), die entsprechend hinter und vor dem zentralen Abschnitt (B) angeordnet sind.

10. Sitzposition-Steuerungsverfahren nach Anspruch 9, wobei die Sitzflächenposition gesteuert wird, so dass:
eine vertikale Position des Hüftpunkts (Hpt) des Passagiers im Wesentlichen auf einer konstanten Ebene bzw. Höhe in dem hinteren Abschnitt (C) in dem vorgegebenen Bereich gehalten wird,
wobei sich der Hüftpunkt (Hpt) des in dem Sitz (1) sitzenden Passagiers erhöht, wenn der Sitz (1) rückwärts in einem hintersten Bereich (D) bewegt wird, der hinter dem hinteren Abschnitt (C) in dem vorgegebenen Bereich angeordnet ist, und/oder
wobei eine vertikale Position des Hüftpunkts (Hpt) des Passagiers im Wesentlichen auf einer konstanten Ebene bzw. Höhe in dem vorderen Abschnitt (A) in dem vorgegebenen Bereich gehalten wird.

## Revendications

1. Dispositif d'ajustement de la position du siège pour un véhicule automobile (V), comprenant :
un siège (1) pouvant fonctionner de manière à être déplacé dans une direction longitudinale du véhicule automobile ; et
un dispositif d'ajustement de la position (20 ; 30 ; 40 ; 50 ; 50' ; 80) pouvant fonctionner de manière à ajuster une position d'une surface de siège d'un coussin de siège (11) dudit siège (1),
dans lequel ledit dispositif d'ajustement de la position (20 ; 30 ; 40 ; 50 ; 50' ; 80) ajuste la position de la surface du siège d'une manière telle qu'un point de hanches (Hpt) d'un passager assis dans le siège (1) baisse lorsque le coussin de siège (11) est déplacé vers l'arrière au moins dans une zone spécifiée dans laquelle le siège (1) peut être déplacé,
**caractérisé en ce que**
un degré de l'abaissement du point de hanches est configuré de telle sorte que ledit degré de l'abaissement du point de hanches (Hpt) sur une section centrale (B) dans ladite zone spécifiée est plus grand que l'abaissement du point de hanches sur une section arrière (C) et sur une section avant (A) qui sont placées respectivement derrière et devant ladite section centrale (B).

2. Dispositif d'ajustement de la position du siège pour un véhicule automobile (V) selon la revendication 1, dans lequel ledit dispositif d'ajustement de la position (50) ajuste la position de la surface du siège d'une manière telle qu'une position verticale dudit point de hanches (Hpt) du passager est gardée sensiblement à un niveau constant sur ladite section arrière (C) dans la zone spécifiée.

3. Dispositif d'ajustement de la position du siège pour un véhicule automobile (V) selon l'une quelconque des revendications précédentes, dans lequel le véhicule automobile (V) comprend un autre siège (7) placé derrière ledit siège (1), dans lequel une zone la plus en arrière (D), laquelle est placée derrière ladite section arrière (C) dans la zone spécifiée, est en outre prévue, dans lequel ledit dispositif d'ajustement de la position (50) ajuste la position de la surface du siège d'une manière telle que ledit point de hanches (Hpt) du passager assis dans le siège (1) s'élève lorsque le siège (1) est déplacé vers l'arrière sur ladite zone la plus en arrière (D).

4. Dispositif d'ajustement de la position du siège pour un véhicule automobile (V) selon l'une quelconque des revendications précédentes, dans lequel ledit dispositif d'ajustement de la position (50) ajuste la position de la surface du siège d'une manière telle qu'une position verticale dudit point de hanches (Hpt) du passager est gardée sensiblement à un niveau constant sur ladite section avant (A) dans la zone spécifiée.

5. Dispositif d'ajustement de la position du siège pour un véhicule automobile (V) selon l'une quelconque des revendications précédentes 1 à 3, dans lequel ledit dispositif d'ajustement de la position (50') ajuste la position de la surface du siège d'une manière telle que ledit point de hanches (Hpt) du passager assis dans le siège (1) baisse lorsque le siège (1) est déplacé vers l'avant sur ladite section avant (A) dans la zone spécifiée.

6. Dispositif d'ajustement de la position du siège pour un véhicule automobile (V) selon l'une quelconque des revendications précédentes, dans lequel ledit dispositif d'ajustement de la position (20 ; 30 ; 40) comprend un mécanisme d'inclinaison (22 ; 16b ; 32 ; 43) pour ajuster la position de la surface du siège d'une manière telle que la position de la surface du siège s'incline vers l'avant lorsque le siège (1) est déplacé vers l'avant.

7. Dispositif d'ajustement de la position du siège pour un véhicule automobile (V) selon l'une quelconque des revendications précédentes, dans lequel ledit dispositif d'ajustement de la position (80) comprend un dispositif de sélection de la caractéristique de déplacement (91, 94) afin de sélectionner une caractéristique par une pluralité de caractéristiques de déplacement d'un point de la surface du siège sur une position spécifiée sur la surface du siège, et un dispositif de déplacement de la surface du siège (71, 80, 90) afin de déplacer la surface du siège de telle sorte que le point de la surface du siège se déplace selon la caractéristique de déplacement sélectionnée par ledit dispositif de sélection de la caractéristique de déplacement (91, 94).

8. Dispositif d'ajustement de la position du siège pour un véhicule automobile (V) selon la revendication 7, dans lequel ledit dispositif de déplacement de la surface du siège inclut un dispositif de coulissement (71) pour ajuster une position longitudinale du coussin de siège (11) du siège (1), et un dispositif de levage (81) pour ajuster une position verticale du coussin de siège (11) en association avec l'ajustement dudit dispositif de coulissement (71).

9. Procédé de commande de la position du siège pour commander une position de siège d'un siège (1) d'un véhicule automobile (V), pouvant fonctionner de manière à être déplacé dans une direction longitudinale du véhicule automobile, comprenant les étapes suivantes :
l'ajustement d'une position d'une surface du siège d'un coussin de siège (11) dudit siège (1) d'une manière telle qu'un point de hanches (Hpt) d'un passager assis dans le siège (1) baisse lorsque le coussin de siège (11) est déplacé vers l'arrière au moins dans une zone spécifiée dans laquelle le siège (1) peut être déplacé,
**caractérisé par**
la configuration d'un degré de l'abaissement du point de hanches de telle sorte que ledit degré de l'abaissement du point de hanches (Hpt) sur une section centrale (B) dans ladite zone spécifiée est plus grand que l'abaissement du point de hanches sur une section arrière (C) et sur une section avant (A) qui sont placées respectivement derrière et devant ladite section centrale (B).

10. Procédé de commande de la position du siège selon la revendication 9, dans lequel la position de la surface du siège est commandée de telle sorte que :
une position verticale dudit point de hanches (Hpt) du passager est gardée sensiblement à un niveau constant sur ladite section arrière (C) dans la zone spécifiée, ledit point de hanches (Hpt) du passager assis dans le siège (1) s'élève lorsque le siège (1) est déplacé vers l'arrière sur une zone la plus en arrière (D) qui est placée derrière ladite section arrière (C) dans la zone spécifiée, et/ou
une position verticale dudit point de hanches (Hpt) du passager est gardée sensiblement à un niveau constant sur ladite section avant (A) dans la zone spécifiée.
